(19)

**Europäisches Patentamt**
**European Patent Office**
**Office européen des brevets**

(11) **EP 4 071 714 A1**

(12) **EUROPEAN PATENT APPLICATION**
published in accordance with Art. 153(4) EPC

(43) Date of publication:
**12.10.2022   Bulletin 2022/41**

(21) Application number: **19955220.9**

(22) Date of filing: **02.12.2019**

(51) International Patent Classification (IPC):
***G06T 9/00*** *(2006.01)*

(52) Cooperative Patent Classification (CPC):
**G06T 9/00**

(86) International application number:
**PCT/CN2019/122502**

(87) International publication number:
**WO 2021/108970 (10.06.2021 Gazette 2021/23)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **GUANGDONG OPPO MOBILE TELECOMMUNICATIONS CORP., LTD.**
**Dongguan, Guangdong 523860 (CN)**

(72) Inventors:
• **YANG, Fuzheng**
**Dongguan, Guangdong 523860 (CN)**

• **WAN, Shuai**
**Dongguan, Guangdong 523860 (CN)**
• **HUO, Junyan**
**Dongguan, Guangdong 523860 (CN)**
• **MA, Yanzhuo**
**Dongguan, Guangdong 523860 (CN)**
• **YANG, Lihui**
**Dongguan, Guangdong 523860 (CN)**
• **SUN, Zexing**
**Dongguan, Guangdong 523860 (CN)**

(74) Representative: **Thorniley, Peter et al**
**Venner Shipley LLP**
**200 Aldersgate**
**London EC1A 4HD (GB)**

(54) **POINT CLOUD PROCESSING METHOD, ENCODER, DECODER AND STORAGE MEDIUM**

(57)     Provided are a point cloud processing method, an encoder, a decoder and a storage medium. The method comprises: performing geometric coordinate conversion and quantization on original points to be encoded in a point cloud to be encoded in order to obtain points to be encoded; acquiring three-dimensional Morton codes and a pre-set stripe division quantity of the points to be encoded; shifting the three-dimensional Morton codes by N bits to the right to obtain M types of Morton codes of parent blocks respectively corresponding to the points to be encoded, wherein the M types of Morton codes correspond to M types of first parent blocks, M is less than or equal to the pre-set stripe division quantity, and N is a positive integer greater than or equal to one; determining M first code point index ranges respectively corresponding to the M types of Morton codes; dividing the space where the points to be encoded within each first code point index range are located into an initial stripe, and shifting each initial stripe to the left according to respective corresponding first three-dimensional translation coordinates to obtain M stripes; and writing the first code point index range and the first three-dimen-

sional translation coordinates corresponding to each of the M stripes into a code stream.

Geometric coordinate transformation and quantization are performed on original points to be coded in a point cloud to be coded to obtain points to be coded — S101

Three-dimensional Morton codes of the points to be coded and a preset number of slice partitions are acquired — S102

The three-dimensional Morton codes are shifted rightwards by N bits to obtain M types of Morton codes of parent blocks corresponding to the points to be coded respectively — S103

M first ranges of coding point indexes corresponding to the M types of Morton codes respectively are determined — S104

A space where points to be coded within each of the first ranges of coding point indexes are located is partitioned into an initial slice, and each initial slice is shifted leftwards according to a respective corresponding first three-dimensional translation coordinate to obtain M slices — S105

The first coding point index range and first three-dimensional translation coordinate corresponding to each of the M slices are written into a bitstream — S106

**FIG. 6**

**Description**

TECHNICAL FIELD

Embodiments of the disclosure relate to the technical field of video coding and decoding, and particularly to a point cloud processing method, an encoder, a decoder, and a storage medium.

BACKGROUND

In a Point Cloud Exploration Model (PCEM)-based encoder framework, geometric information of a point cloud and attribute information corresponding to each point are coded separately. The geometric information is reconstructed after geometry coding. The coding of the attribute information depends on the reconstructed geometric information.
First, coordinate transformation is performed on the geometric information so as to include the whole point cloud in a bounding box. Then, quantization is performed. Next, octree partitioning is performed on the bounding box. In an octree-based geometric information coding framework, the bounding box is equally partitioned into eight sub-cubes. A nonempty sub-cube (including a point in the point cloud) continues to be equally partitioned into eight portions, until a leaf node obtained by partitioning is a $1\times1\times1$ unit cube, the partitioning is stopped. One or more points in the leaf node are coded to generate a binary bitstream, i.e., a geometric bitstream. The geometric information is reconstructed after geometry coding. At present, attribute coding is performed mainly for color information. First, the color information is transformed from a Red-Green-Blue (RGB) color space to a YUV color space. Then, the point cloud is recolored by use of the reconstructed geometric information so as to achieve a correspondence between the uncoded attribute information and the reconstructed geometric information. During the coding of the color information, backward difference prediction is performed immediately after the point cloud is ordered based on Morton codes. Finally, a prediction residual is quantized and coded to generate a binary bitstream.
However, the point cloud directly enters a coding portion after being preprocessed by transformation, quantization, etc. In such case, when one or more points to be coded in the whole point cloud are coded, since the attribute coding of the point cloud is based on geometry coding, coding operations may be performed by only one coder, which affect the time efficiency of coding.

SUMMARY

The embodiments of the disclosure provide a point cloud processing method, an encoder, a decoder, and a storage medium, which may perform slice partition first on a preprocessed point cloud and perform coding processing in parallel based on each slice, thereby improving the coding/decoding efficiency and reducing the coding time.
The technical solutions of the embodiments of the disclosure may be implemented as follows.
According to a first aspect, an embodiment of the disclosure provides a point cloud processing method, which may be applied to an encoder and include the following operations.
Geometric coordinate transformation and quantization are performed on original points to be coded in a point cloud to be coded to obtain points to be coded.
Three-dimensional Morton codes of the points to be coded and a preset number of slice partitions are acquired.
The three-dimensional Morton codes are shifted rightwards by N bits to obtain M types of Morton codes of parent blocks corresponding to the points to be coded respectively. The M types of Morton codes correspond to M types of first parent blocks, M is less than or equal to the preset number of slice partitions, and N is a positive integer more than or equal to 1.
M first ranges of coding point indexes corresponding to the M types of Morton codes respectively are determined.
A space where points to be coded within each of the first ranges of coding point indexes are located is partitioned into an initial slice, and each initial slice is shifted leftwards according to a respective corresponding first three-dimensional translation coordinate to obtain M slices.
The first range of coding point indexes and the first three-dimensional translation coordinate corresponding to each of the M slices are written into a bitstream.
According to a second aspect, an embodiment of the disclosure also provides a point cloud processing method, which may be applied to a decoder and include the following operations.
A bitstream is parsed to obtain a first range of coding point indexes and first three-dimensional translation coordinate corresponding to each of M slices, a geometric bitstream, and an attribute bitstream.
Geometric information of a point cloud to be decoded of each slice is determined based on the first range of coding point indexes and first three-dimensional translation coordinate corresponding to each slice, and the geometric bitstream.
Attribute information of the point cloud to be decoded of each slice is determined based on the attribute bitstream.

A three-dimensional picture model of the point cloud to be decoded is restored based on the geometric information of the point cloud to be decoded of each slice and the attribute information of the point cloud to be decoded of each slice.

According to a third aspect, an embodiment of the disclosure provides an encoder, which may include a transformation and quantization portion, an acquisition portion, a shift portion, a determination portion, a partition portion, and a write portion.

The transformation and quantization portion may be configured to perform geometric coordinate transformation and quantization on original points to be coded in a point cloud to be coded to obtain points to be coded.

The acquisition portion may be configured to acquire three-dimensional Morton codes of the points to be coded and a preset number of slice partitions.

The shift portion may be configured to shift the three-dimensional Morton codes rightwards by N bits to obtain M types of Morton codes of parent blocks corresponding to the points to be coded respectively. The M types of Morton codes correspond to M types of first parent blocks, M is less than or equal to the preset number of slice partitions, and N is a positive integer more than or equal to 1.

The determination portion may be configured to determine M first ranges of coding point indexes corresponding to the M types of Morton codes respectively.

The partition portion may be configured to partition a space where the points to be coded within each of the first ranges of coding point indexes are located into an initial slice.

The shift portion may further be configured to shift each initial slice leftwards according to a respective corresponding first three-dimensional translation coordinate to obtain M slices.

The write portion may be configured to write the first range of coding point indexes and first three-dimensional translation coordinate corresponding to each of the M slices into a bitstream.

According to a fourth aspect, an embodiment of the disclosure provides a decoder, which may include a parsing portion and a decoding portion.

The parsing portion may be configured to parse a bitstream to obtain a first range of coding point indexes and a first three-dimensional translation coordinate corresponding to each of M slices, a geometric bitstream, and an attribute bitstream.

The decoding portion may be configured to determine geometric information of a point cloud to be decoded of each slice based on the first range of coding point indexes and the first three-dimensional translation coordinate corresponding to each slice, and the geometric bitstream, determine attribute information of the point cloud to be decoded of each slice based on the attribute bitstream, and obtain a restored value of the point cloud to be decoded based on the geometric information of the point cloud to be decoded of each slice and the attribute information of the point cloud to be decoded of each slice.

According to a fifth aspect, an embodiment of the disclosure also provides an encoder, which may include a first memory and a first processor.

The first memory may be configured to store an executable instruction.

The first processor may be configured to execute the executable instruction stored in the first memory to implement the point cloud processing method as described in the first aspect.

According to a sixth aspect, an embodiment of the disclosure also provides a decoder, which may include a second memory and a second processor.

The second memory may be configured to store an executable instruction.

The second processor may be configured to execute the executable instruction stored in the second memory to implement the point cloud processing method as described in the second aspect.

According to a seventh aspect, an embodiment of the disclosure provides a computer-readable storage medium, which may be applied to coding and store an executable instruction. The executable instruction may be used for, when being executed, causing a first processor to implement the point cloud processing method as described in the first aspect.

According to an eighth aspect, an embodiment of the disclosure provides a computer-readable storage medium, which may be applied to a decoder and store an executable instruction. The executable instruction may be used for, when being executed, causing a second processor to implement the point cloud processing method as described in the second aspect.

The embodiments of the disclosure provide a point cloud processing method, an encoder, a decoder, and a storage medium. The method includes the following operations. Geometric coordinate transformation and quantization are performed on original points to be coded in a point cloud to be coded to obtain points to be coded. Three-dimensional Morton codes of the points to be coded and a preset number of slice partitions are acquired. The three-dimensional Morton codes are shifted rightwards by N bits to obtain M types of Morton codes of parent blocks corresponding to the points to be coded respectively. The M types of Morton codes correspond to M types of first parent blocks, M is less than or equal to the preset number of slice partitions, and N is a positive integer more than or equal to 1. M first ranges of coding point indexes corresponding to the M types of Morton codes respectively are determined. A space where the points to be coded within each of the first ranges of coding point indexes are located is partitioned into an initial slice, and each initial slice is shifted leftwards according to a respective corresponding first three-dimensional translation coordinate to obtain M slices. The first range of coding point indexes and first three-dimensional translation coordinate corresponding to each of the M slices are written into a bitstream. With the above-mentioned technical implementation solution, the encoder, after performing the preprocessing such as transformation and quantization in a geometry coding process, may search a parent block of each point to be coded based on a three-dimensional Morton code of the point to be coded, and implement slice partition based on the found parent blocks of the points to be coded. As such, the partition of multiple slices may be implemented in consideration of partitioning points to be coded corresponding to the same type of parent blocks into a slice, and then coding is performed based on each slice. Therefore, the effect of parallel coding is achieved, the coding/decoding efficiency is improved, and the coding time is reduced.

BRIEF DESCRIPTION OF THE DRAWINGS

FIG. 1 is an exemplary flow block diagram of coding according to an embodiment of the disclosure.

FIG. 2 is a first exemplary schematic diagram of two-dimensional Morton coding according to an embodiment of the disclosure.

FIG. 3 is a second exemplary schematic diagram of two-dimensional Morton coding according to an embodiment of the disclosure.

FIG. 4 is a first exemplary schematic diagram of three-dimensional Morton coding according to an embodiment of the disclosure.

FIG. 5 is a second exemplary schematic diagram of three-dimensional Morton coding according to an embodiment of the disclosure.

FIG. 6 is a first flowchart of a point cloud processing method according to an embodiment of the disclosure.

FIG. 7 is a second flowchart of a point cloud processing method according to an embodiment of the disclosure.

FIG. 8 is a flowchart of a point cloud processing method according to an embodiment of the disclosure.

FIG. 9 is a first structure diagram of an encoder according to an embodiment of the disclosure.

FIG. 10 is a second structure diagram of an encoder according to an embodiment of the disclosure.

FIG. 11 is a first structure diagram of a decoder according to an embodiment of the disclosure.

FIG. 12 is a second structure diagram of a decoder according to an embodiment of the disclosure.

DETAILED DESCRIPTION

In order to make the characteristics and technical contents of the embodiments of the disclosure understood in more detail, the implementation of the embodiments of the disclosure will be described below in combination with the drawings in detail. The appended drawings are only for description as references and not intended to limit the embodiments of the disclosure.

In the embodiments of the disclosure, in a PCEM-based encoder framework, after a point cloud (multiple continuous frame sequences) input to a three-dimensional picture model is preprocessed by transformation and quantization, slice partition is performed on points to be coded in the preprocessed point cloud data to be coded, and each slice is coded independently.

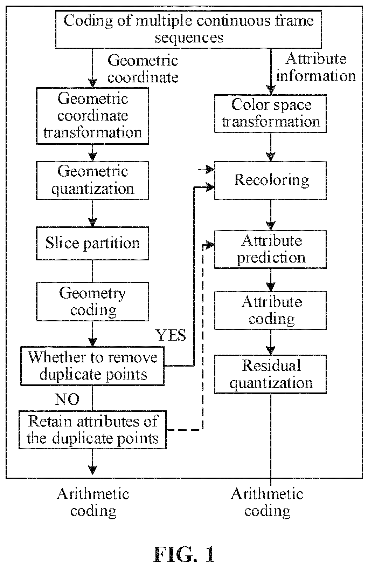

In a flow block diagram of PCEM-based coding in FIG. 1, a point cloud encoder performs coordinate transformation first on geometric information, i.e., geometric coordinates, of point cloud data to be coded, and then performs quantization. After the above-mentioned preprocessing, slice partition is performed on points to be coded to partition the point cloud data into multiple slices. In each slice, geometric information of a point cloud and attribute information corresponding to each point cloud are coded separately. During geometry coding, in an octree-based geometric information coding process, a bounding box is equally partitioned into eight sub-cubes, and a nonempty sub-cube (including a point in the point cloud) continues to be equally partitioned into eight portions, until a leaf node obtained by partitioning is a 1×1×1 unit cube, the partitioning is stopped. Geometry coding is performed on a point in the leaf node. After geometry coding, since rounding in quantization makes the geometric information of part of point clouds the same, it is determined whether to remove duplicate points based on parameters. If it is determined to remove duplicate points, attribute prediction is performed. If it is determined not to remove duplicate points, attributes of the duplicate points are retained. Finally, arithmetic coding is performed to generate a binary geometric bitstream, i.e., a geometric bitstream.

During attribute coding, after geometry coding and the reconstruction of the geometric information, color transformation is performed to transform color information (i.e., attribute information) from an RGB color space to a YUV color space. Then, the point cloud is recolored by use of the reconstructed geometric information so as to achieve a correspondence between the uncoded attribute information and the reconstructed geometric information. A high-frequency coefficient and a low-frequency coefficient are obtained by transformation. Then, residual quantization (i.e., coefficient quantization) is performed on the coefficients. Finally, slice merging is performed on geometry coding data obtained by octree partitioning and surface fitting and attribute coding data obtained by coefficient quantization, and then a vertex coordinate (i.e., arithmetic code) of each block is sequentially coded to generate a binary attribute bitstream, i.e., an attribute bitstream.

The encoder obtains geometric coordinate information of the point cloud, and may obtain a Morton code corresponding to each point in the point cloud by use of coordinate information of the point. The Morton code is also referred to as a z-order code because a coding order of the Morton code follows the spatial z order. A specific method for calculating a Morton code is described as follows. For a three-dimensional coordinate of which each component is represented by a d-bit binary number, three components thereof are represented as follows:

$$x = \sum_{\ell=1}^{d} 2^{d-\ell} x_\ell, \qquad y = \sum_{\ell=1}^{d} 2^{d-\ell} y_\ell, \qquad z = \sum_{\ell=1}^{d} 2^{d-\ell} z_\ell.$$

Here, $x_\ell, y_\ell, z_\ell \in \{0,1\}$ represents binary numerical values corresponding to a most significant bit ($\ell = 1$) and least significant bit ($\ell = d$) of $x$, y, z respectively. The Morton code M is obtained by arranging, for $x$, $y$, $z$, $x_\ell$, $y_\ell$, $z_\ell$ alternately in sequence from the most significant bit to the least significant bit. M is calculated through the following formula:

$$M = \sum_{\ell=1}^{d} 2^{3(d-\ell)} (4x_\ell + 2y_\ell + z_\ell) = \sum_{\ell'=1}^{3d} 2^{3d-\ell'} m_{\ell'} \ (1).$$

Here, $m_{\ell'} \in \{0,1\}$ represents values corresponding to a most significant bit ($\ell' = 1$) to least significant bit ($\ell' = 3d$) of M respectively. After the Morton code M corresponding to each point in the point cloud is obtained, the points in the point cloud are arranged in the ascending order of Morton codes, and a weight w corresponding to each point is set to 1. The points are represented as a combination like z | (y << 1) | (x << 2) in a computer language.

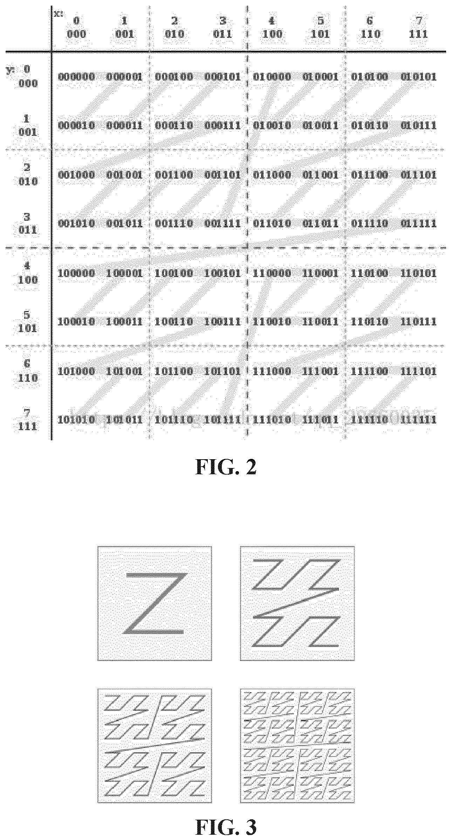

Descriptions are made in combination with FIGS. 2 and 3. Ordering based on high and low bits is described herein by taking z, y, x (x | (y << 1)|(z << 2)) as an example.

FIG. 2 illustrates spatial codes of each pixel of an 8*8 picture. Position coordinates of x and y values at 0 to 7 are coded by one-dimensional binary numbers from 000000 to 111111. Binary coordinate values are interleaved to obtain a binary z-value map. z shapes are obtained by connection in numerical directions to generate recursive z-shaped curves. In FIG. 2, a z value is put at each position according to a connection sequence. In practice, the figure is formed by iteration in a z direction, from 00 to 11 (there is one z in the whole figure), then from 0000 to 1111 (a z is put at each point in the previous z), and then from 000000 to 111111 (a z is put at each point in the previous z), recursively increasing with two bits added every time.

Exemplarily, FIG. 3 illustrates 2×2, 4×4, 8×8, and 16×16 space coding orders. It can be seen from the figure that a coding order of a Morton code follows the spatial z order.

It is to be noted that, for a Morton code corresponding to a two-dimensional coordinate, x and y coordinates are binarized first. Then, values of high to low bits of x and y are arranged alternately from a most significant bit. Finally, values of Morton codes are connected from small to large values, thereby forming Z-shaped connection sequences, and every four points may be considered as a small block, and except the last two bits, the first four bits thereof are the same. Then, a parent block may be determined for the Morton codes of which the first four bits are the same. In such case, the Morton codes corresponding to the four points may be shifted rightwards by two bits to obtain a Morton code corresponding to the parent block thereof. As such, every four blocks of the same level are continuously combined, namely values of the Morton codes are shifted rightwards by two bits, so as to obtain a parent block thereof. Similarly, under a three-dimensional coordinate, every eight small blocks are combined, namely values of Morton codes are shifted rightwards by three bits to obtain a parent block thereof.

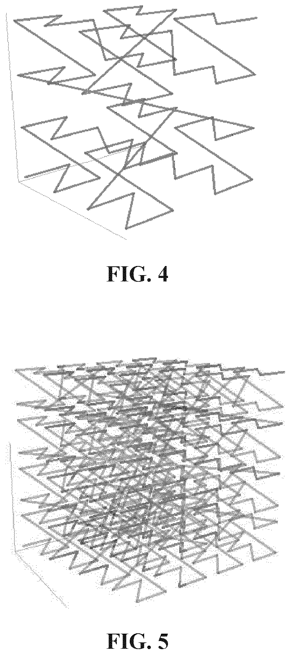

Under a three-dimensional condition, a recursion process is illustrated in FIGS. 4 and 5. Coordinate interleaving is implemented, and in general, coordinate values are continuously dispersed. x|(y << 1) | (z << 2). That is, each coordinate value is dispersed, and each bit is sequentially interleaved, first z, then y, and finally z. A decoding process is an aggregation process.

Based on the above introduction, a point cloud processing method provided in the embodiments of the disclosure will be described below, which is mainly applied to an encoder (point cloud coder) in an encoder framework at a position illustrated by the dashed box in FIG. 1.

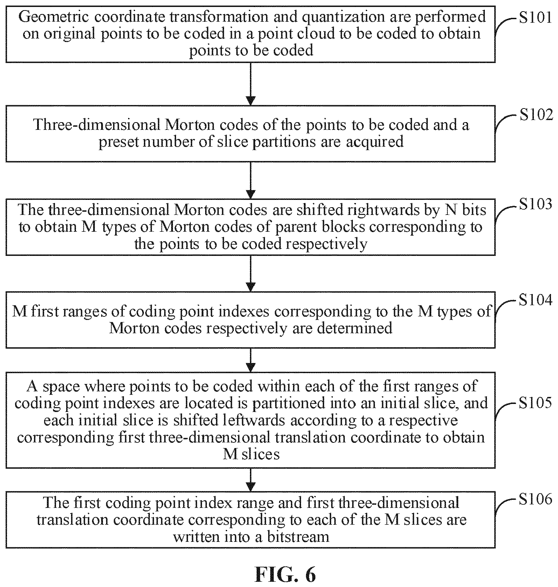

As illustrated in FIG. 6, an embodiment of the disclosure provides a point cloud processing method, which may include the following operations.

In S101, geometric coordinate transformation and quantization are performed on original points to be coded in a point cloud to be coded to obtain points to be coded.

In S102, three-dimensional Morton codes of the points to be coded and a preset number of slice partitions are acquired.

In S103, the three-dimensional Morton codes are shifted rightwards by N bits to obtain M types of Morton codes of parent blocks corresponding to the points to be coded respectively. The M types of Morton codes correspond to M types of first parent blocks, M is less than or equal to the preset number of slice partitions, and N is a positive integer more than or equal to 1.

In S104, M first ranges of coding point indexes corresponding to the M types of Morton codes respectively are determined.

In S105, a space where points to be coded within each of the first ranges of coding point indexes are located is partitioned into an initial slice, and each initial slice is shifted leftwards according to a respective corresponding first three-dimensional translation coordinate to obtain M slices.

In S106, the first range of coding point indexes and first three-dimensional translation coordinate corresponding to each of the M slices are written into a bitstream.

According to the point cloud processing method provided in the embodiment of the disclosure, after transformation and quantization in geometry coding, preprocessed points to be coded are partitioned into different slices according to Morton codes of a point cloud, thereby implementing parallel coding based on the slices.

In the embodiment of the disclosure, the point cloud to be coded is point cloud data of an object to be coded in the disclosure. Preprocessed points to be coded of a point cloud to be coded may include N points, i.e., N points to be coded. Here, N is more than or equal to 1. The encoder performs geometric coordinate transformation and quantization on original points to be coded in a point cloud to be coded to obtain points to be coded. Three-dimensional Morton codes of the points to be coded and a preset number of slice partitions are acquired. The three-dimensional Morton codes are shifted rightwards by N bits to obtain M types of Morton codes of parent blocks corresponding to the points to be coded respectively, the M types of Morton codes corresponding to M types of first parent blocks, M being less than or equal to the preset number of slice partitions, and N being a positive integer more than or equal to 1. M first ranges of coding point indexes corresponding to the M types of Morton codes are determined. A space where points to be coded within each of the first ranges of coding point indexes are located is partitioned into an initial slice, and each initial slice is shifted leftwards according to a respective corresponding first three-dimensional translation coordinate to obtain M slices. Then, the encoder may perform parallel coding based on the M slices, and write the first range of coding point indexes and first three-dimensional translation coordinate corresponding to each of the M slices to a bitstream.

It is to be noted that, in the embodiment of the disclosure, each slice may include different points to be coded. Therefore, when the first ranges of coding point indexes are determined, during coding, the encoder needs to write the first range of coding point indexes and first three-dimensional translation coordinate corresponding to each slice into a geometric bitstream, i.e., a geometric bitstream, as header information of geometric information, and transmit the geometric bitstream to a decoder for the decoder to parse and decode directly during decoding.

In some embodiments of the disclosure, the three-dimensional Morton code of a point to be coded is calculated according to the formula (1). The preset number of slice partitions is preset, or input by a user, or set to be a default value. No limits are made in the embodiment of the disclosure.

Exemplarily, the preset number of slice partitions may be 10.

In some embodiments of the disclosure, the encoder may shift the three-dimensional Morton codes corresponding to the preprocessed points to be coded rightwards to determine a parent block corresponding to each point to be coded and M types of Morton codes corresponding to all the parent blocks. Right shift by N bits makes the number of parent blocks less than or equal to the preset number of slice partitions.

In some embodiments of the disclosure, after acquiring the three-dimensional Morton codes of the points to be coded and the preset number of slice partitions and before shifting the three-dimensional Morton codes rightwards by N bits to obtain the M types of Morton codes of the parent blocks corresponding to the points to be coded respectively, the encoder may determine the number of right shifting bits N based on a maximum value and minimum value in the three-dimensional Morton codes of the points to be coded as follows.

(1) The encoder determines a difference between the maximum value and minimum value in the three-dimensional Morton codes, shifts the difference rightwards by three bits sequentially until a difference obtained after right shift by 3K bits is less than or equal to the preset number of slice partitions, K being an integer more than or equal to 0, and determines a value of the N to be 3K.

(2) The encoder determines a difference between the maximum value and minimum value in the three-dimensional Morton codes, shifts the difference rightwards sequentially until a difference obtained after right shift by L bits is less than or equal to the preset number of slice partitions, L being an integer more than or equal to 0, and determine a value of the N to be L.

In the embodiment of the disclosure, the encoder determines the difference between the maximum value and minimum value in the three-dimensional Morton codes, and shifts the difference rightwards to determine a number of bits under which the number of parent blocks is less than or equal to the preset number of slice partitions.

It is to be noted that, in the embodiment of the disclosure, the three-dimensional Morton codes of the points to be coded are arranged in the ascending order (i.e., from small to large), and each point to be coded corresponds to a Morton code. When the point cloud in a space where the points to be coded are located is continuously distributed, namely all points in the point cloud are filled, the difference may represent a number of points between the maximum Morton code and the minimum Morton code. The Morton code may be shifted rightwards to obtain a Morton code of a corresponding parent block. Therefore, the encoder may also shift the difference (delta) rightwards to obtain the number of parent blocks between the maximum and minimum Morton codes as long as the finally obtained number of parent blocks is less than or equal to the preset number of slice partitions. In such case, the number of right shifting bits for the difference is N.

In the embodiment of the disclosure, the bit number of shifting the difference rightwards sequentially by the encoder may or may not be a multiple of 3. No limits are made in the embodiment of the disclosure. When the number of right shifting bits is a multiple of 3, a cubic slice is obtained. When the number of right shifting bits is not a multiple of 3, a cuboidal slice is obtained.

In the embodiment of the disclosure, the encoder, after determining the M types of Morton codes, determines the specific types of Morton codes corresponding to the points to be coded in the M types of Morton codes. Since the Morton codes of the points to be coded are arranged in the ascending order, the Morton code value of the parent block corresponding to each point to be coded may be put in a set M. The Morton codes in the set M are also arranged in the ascending order, and the points to be coded corresponding to the Morton codes of the same type of parent blocks are continuous. Therefore, the encoder, after obtaining the Morton code of the parent block corresponding to the first point to be coded, may obtain values of the M types of Morton codes corresponding to the subsequent parent blocks by adding 1.

It is to be noted that the N points to be coded correspond to the M types of Morton codes, and M is less than N. The encoder may determine an index range of points to be coded corresponding to each type of Morton codes from the set M, namely obtaining M first ranges of coding point indexes. The first range of coding point indexes represents the number of points belonging to a parent block.

In some embodiments of the disclosure, the encoder may traverse the points to be coded within a preset range based on the M types of Morton codes to determine the M first ranges of coding point indexes. Alternatively, the encoder may determine the M first ranges of coding point indexes corresponding to the M types of Morton codes respectively by use of a Standard Template Library (STL) algorithm.

The preset range may be a numerical value, and no limits are made in the embodiment of the disclosure. In the embodiment of the disclosure, the encoder may find the index range corresponding to each parent block from M by use of a fast lookup algorithm (the STL algorithm), or search the Morton codes by traversing within a certain range, or use another algorithm capable of finding the corresponding Morton codes fast. No limits are made in the embodiment of the disclosure.

In some embodiments of the disclosure, after acquiring the three-dimensional Morton codes of the points to be coded and the preset number of slice partitions and before shifting the three-dimensional Morton codes rightwards by N bits to obtain the M types of Morton codes of the parent blocks corresponding to the points to be coded respectively, the encoder needs to acquire N, specifically as follows. A number of parent blocks is determined based on the preset number of slice partitions. The number of parent blocks is less than or equal to the preset number of slice partitions and is F times 8, and the number of parent blocks is written to the bitstream. A maximum value in the three-dimensional Morton codes is determined. The maximum value is shifted rightwards by H bits until 3F bits of the maximum value remain, and H is a positive integer more than or equal to 1. A value of the N is determined to be H.

It is to be noted that H may be 0.

In some embodiments of the disclosure, in addition to shifting the maximum and minimum values in the Morton codes rightwards, the encoder may obtain the number of parent blocks through specifying the number, size, or the like of parent blocks to be partitioned. The number of parent blocks is set to a constant value, and then the number of right shifting bits N for the Morton codes may be obtained.

The number of parent blocks may be preset by the user, or determined based on the preset number of slice partitions. The number of parent blocks is maximum power of 8 in the preset number of slice partitions. For example, when the preset number of slice partitions is 10, the number of parent blocks is 8. When the preset number of slice partitions is 65, the number of parent blocks is 64.

In some embodiments of the disclosure, the encoder may determine the number of parent blocks based on the preset number of slice partitions. The number of parent blocks is less than or equal to the preset number of slice partitions and is F times 8, and the number of parent blocks is written to the bitstream. A maximum value in the three-dimensional Morton codes is determined. The maximum value is shifted rightwards by H bits until 3F bits of the maximum value remain, and H is a positive integer more than or equal to 1. A value of the N is determined to be H.

It is to be noted that the number of parent blocks needs to be written into the bitstream for decoding at the decoder.

In the embodiments of the disclosure, when the number of parent blocks is set, considering that Morton codes may partition a cube into eight small cubes, the number of parent blocks is necessarily set to a multiple of 8. When the number of parent blocks is 8, the maximum Morton code is shifted rightwards until three bits of the Morton code remain. When the number of parent blocks is 64, the maximum Morton code is shifted rightwards until six bits of the Morton code remain.

In some embodiments of the disclosure, after partitioning the space where the points to be coded within each of the first ranges of coding point indexes are located into an initial slice and before shifting each initial slice leftwards according to the respective corresponding first three-dimensional translation coordinate to obtain the M slices, the encoder determines the first three-dimensional translation coordinate corresponding to each initial slice based on N and the M types of Morton codes. The M types of Morton codes are in one-to-one correspondence with the M initial slices.

In the embodiment of the disclosure, the encoder, when performing geometry coding on each slice, needs to perform coordinate translation (according to the first two-dimensional translation coordinate) on the points to be coded in the slice, thereby coding the points to be coded from the minimum Morton code. The first three-dimensional translation coordinates corresponding to respective slices are different.

Exemplarily, if a Morton code of a parent block corresponding to a slice is 001, and left shift by N bits is performed to obtain a final slice, the first three-dimensional translation coordinate is $(0, 0, 2^N)$. If a Morton code of a parent block corresponding to a slice is 011, and left shift by N bits is performed to obtain a final slice, the first three-dimensional translation coordinate is $(0, 2^N, 2^N)$.

In some embodiments of the disclosure, when the encoder partitions the slices, an identifier may be set for each slice. The encoder may write the identifier of each slice as well as the first range of coding point indexes corresponding to each slice and the first three-dimensional translation coordinate corresponding to each slice into the bitstream. At the encoder side, id (i.e., the identifier of each slice) and origin (the first three-dimensional translation coordinate) corresponding to each slice and the point number (i.e., the first range of coding point indexes) of the slice are transmitted to the decoder side as geometric header information gps. id of the slice is also transmitted to the decoder side as attribute header information aps.

Exemplarily, the encoder, when performing slice partition for the preprocessed points to be coded, acquires the three-dimensional Morton codes of the points to be coded first, and orders these three-dimensional Morton codes in the ascending order. In such case, each point to be coded in the point cloud corresponds to a Morton code. Then, subtraction is performed on the maximum and minimum values in the Morton codes to obtain a difference delta between the two Morton codes. When the point cloud in the space is continuously distributed, namely all the points in the point cloud are filled, delta represents the number of points between the maximum and minimum Morton codes.

The Morton code may be shifted rightwards to obtain a Morton code of a corresponding parent block. Therefore, delta may also be shifted rightwards to obtain the number of parent blocks between the maximum and minimum Morton codes. It is assumed that, when the number of slices is A, the number of parent blocks is limited to range from 0 to A. In such case, delta is continuously shifted rightwards, by three bits every time. When delta is numerically less than or equal to A after being shifted rightwards by N bits, delta represents that the number of parent blocks between the maximum and minimum Morton codes is less than or equal to A.

The encoder, after determining the number of right shifting bits N, shifts the values of all the Morton codes rightwards by N bits to obtain values of the Morton codes of the parent blocks corresponding to respective points, and puts them in the set M. Alternatively, after the Morton code of the parent block corresponding to the first point is obtained, the values of the Morton codes of the subsequent parent blocks may be obtained one by one by adding 1. As such, the encoder may find the index range corresponding to each parent block from geometric M through a fast lookup algorithm (the STL algorithm). Points corresponding to indexes in each range may be in different slices according to the obtained index ranges. Then, coordinate translation is performed on the points in the slices to complete the partition of the slices.

It can be understood that the encoder, after performing preprocessing such as transformation and quantization in a geometry coding process, may search a parent block of a point to be coded based on a three-dimensional Morton code of the point to be coded, and implement slice partition based on a found parent block of the point to be coded. As such, the partition of multiple slices may be implemented in consideration of partitioning points to be coded corresponding to the same type of parent blocks into a slice, and then coding is performed based on each slice. Therefore, the effect of parallel coding is achieved, the coding/decoding efficiency is improved, and the coding time is reduced.

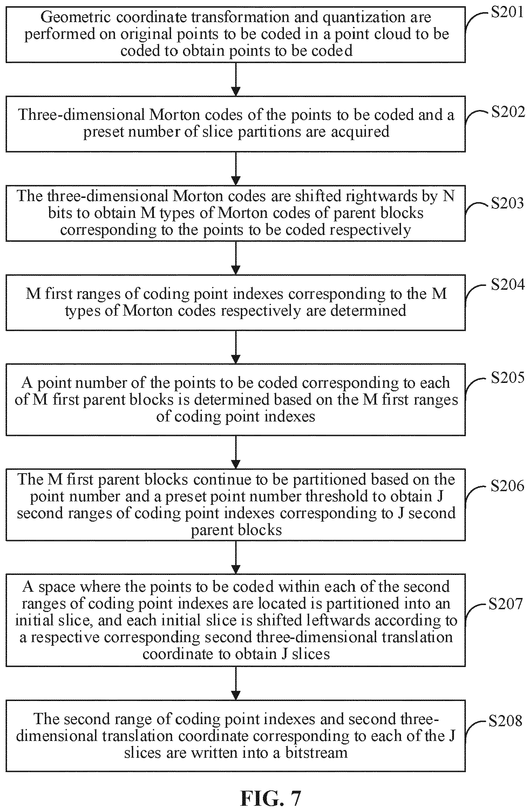

As illustrated in FIG. 7, an embodiment of the disclosure provides a point cloud processing method, which may include the following operations.

In S201, geometric coordinate transformation and quantization are performed on original points to be coded in a point cloud to be coded to obtain points to be coded.

Descriptions about the implementation of the operation in S201 in the embodiment of the disclosure are consistent with those about the implementation of the operation in S101, and elaborations are omitted herein.

In S202, three-dimensional Morton codes of the points to be coded and a preset number of slice partitions are acquired.

Descriptions about the implementation of the operation in S202 in the embodiment of the disclosure are consistent with those about the implementation of the operation in S102, and elaborations are omitted herein.

In S203, the three-dimensional Morton codes are shifted rightwards by N bits to obtain M types of Morton codes of parent blocks corresponding to the points to be coded respectively. The M types of Morton codes correspond to M types of first parent blocks, M is less than or equal to the preset number of slice partitions, and N is a positive integer more than or equal to 1.

Descriptions about the implementation of the operation in S203 in the embodiment of the disclosure are consistent with those about the implementation of the operation in S103, and elaborations are omitted herein.

In S204, M first ranges of coding point indexes corresponding to the M types of Morton codes respectively are determined.

Descriptions about the implementation of the operation in S204 in the embodiment of the disclosure are consistent with those about the implementation of the operation in S104, and elaborations are omitted herein.

In S205, a point number of the points to be coded corresponding to each of M first parent blocks is determined based on the M first ranges of coding point indexes.

In S206, the M first parent blocks continue to be partitioned based on the point number and a preset point number threshold to obtain J second ranges of coding point indexes corresponding to J second parent blocks. J is a positive integer more than or equal to 1.

In S207, a space where the points to be coded within each of the second ranges of coding point indexes are located is partitioned into an initial slice, and each initial slice is shifted leftwards according to a respective corresponding second three-dimensional translation coordinate to obtain J slices.

In S208, the second range of coding point indexes and second three-dimensional translation coordinate corresponding to each of the J slices are written into a bitstream.

In the embodiment of the disclosure, when parent blocks are partitioned in a point cloud, a point number of a parent block may be obtained, and if the point number of the parent block is relatively small, the parent block may be merged with a next block. For a last parent block, a point number may be determined according to a remaining point number, and if the point number is relatively small, the parent block is merged with a previous parent block.

In the embodiment of the disclosure, the encoder obtains M first ranges of coding point indexes, namely learning about a point number of a first parent block corresponding to each slice. A length of the first range of coding point indexes is the point number of the first parent block. Then, secondary partition may be performed on M first parent blocks based on the known point number of each first parent block and a preset point number threshold, so as to obtain J second ranges of coding point indexes corresponding to J second parent blocks. The preset point number threshold includes a preset point number upper limit and a preset point number lower limit. This operation is specifically implemented as follows. When the point number is greater than the preset point number upper limit, secondary partition is performed on the current first parent block corresponding to the point number to obtain at least two second parent blocks. When the point number is less than the preset point number lower limit, the current first parent block corresponding to the point number is merged with a previous parent block to obtain a second parent block . The J second parent blocks corresponding to the points to be coded are obtained when the point numbers are all between the preset lower limit and the preset upper limit. The J second ranges of coding point indexes corresponding to the J second parent blocks are determined.

In the embodiment of the disclosure, the determination regarding whether the point number is relatively large or small may use a threshold including max and min. If the point number is less than min, it is determined that the point number is small. If the point number is greater than max, it is determined that the point number is large, and secondary partition is performed on the corresponding parent block.

The preset point number upper limit and the preset point number lower limit may be determined by an actual situation. No limits are made in the embodiments of the disclosure.

The encoder, after learning about the J second ranges of coding point indexes, may repartition a space where the points to be coded in each of the second ranges of coding point indexes are located into an initial slice and shift each initial slice leftwards according to a respective corresponding second three-dimensional translation coordinate to obtain J slices, and write the second range of coding point indexes and second three-dimensional translation coordinate corresponding to each of the J slices into a bitstream.

It can be understood that the encoder, after performing the preprocessing such as transformation and quantization in a geometry coding process, may search a parent block of each point to be coded based on a three-dimensional Morton code of the point to be coded, and implement slice partition based on the found parent blocks of the points to be coded. As such, the secondary partition of multiple slices is implemented in consideration of partitioning points to be coded corresponding to the same type of parent blocks into a slice. Therefore, slices may be partitioned more accurately.

Based on the above introduction, the point cloud processing method provided in the embodiments of the disclosure will be introduced below, which is mainly for a decoder frame.

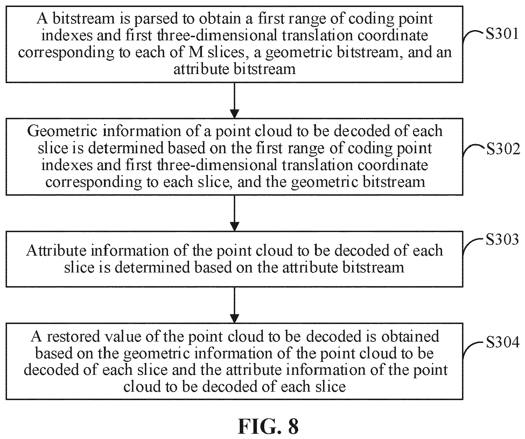

As illustrated in FIG. 8, an embodiment of the disclosure provides a point cloud processing method, which is applied to a decoder and includes the following operations.

In S301, a bitstream is parsed to obtain a first range of coding point indexes and first three-dimensional translation coordinate corresponding to each of M slices, a geometric bitstream, and an attribute bitstream.

In S302, geometric information of a point cloud to be decoded of each slice is determined based on the first range of coding point indexes and first three-dimensional translation coordinate corresponding to each slice, and the geometric bitstream.

In S303, attribute information of the point cloud to be decoded of each slice is determined based on the attribute bitstream.

In S304, a restored value of the point cloud to be decoded is obtained based on the geometric information of the point cloud to be decoded of each slice and the attribute information of the point cloud to be decoded of each slice.

In the embodiment of the disclosure, a coded bitstream, i.e., a coded bitstream, is transmitted to the decoder. The coded bitstream is parsed to obtain a first range of coding point indexes and first three-dimensional translation coordinate corresponding to each of M slices, and a geometric bitstream. Then, the decoder may determine geometric information according to an identifier of each slice as well as the corresponding first range of coding point indexes and first three-dimensional translation coordinate in combination with the geometric bitstream, and determine attribute information of a point cloud to be decoded of each slice (the identifier of each slice) based on an attribute bitstream. Finally, the decoder obtains a restored value of the point cloud to be decoded based on the geometric information of the point cloud to be decoded of each slice and the attribute information of the point cloud to be decoded of each slice, thereby completing decoding.

It can be understood that the encoder, after performing the preprocessing such as transformation and quantization in a geometry coding process, may search a parent block of each point to be coded based on a three-dimensional Morton code of the point to be coded, and implement slice partition based on the found parent blocks of the points to be coded. As such, the partition of multiple slices may be implemented in consideration of partitioning points to be coded corresponding to the same type of parent blocks into a slice, and then coding is performed based on each slice. Therefore, the effect of parallel coding is achieved, the coding/decoding efficiency is improved, and the coding time is reduced. Since the ranges of coding point indexes and first three-dimensional translation coordinates corresponding to respective slices are different, it is necessary to code and write the range of coding point indexes and first three-dimensional translation coordinate corresponding to each slice into the bitstream during coding, and then the decoder may obtain them by decoding and parsing to restore a three-dimensional picture model. Therefore, the decoding efficiency is improved.

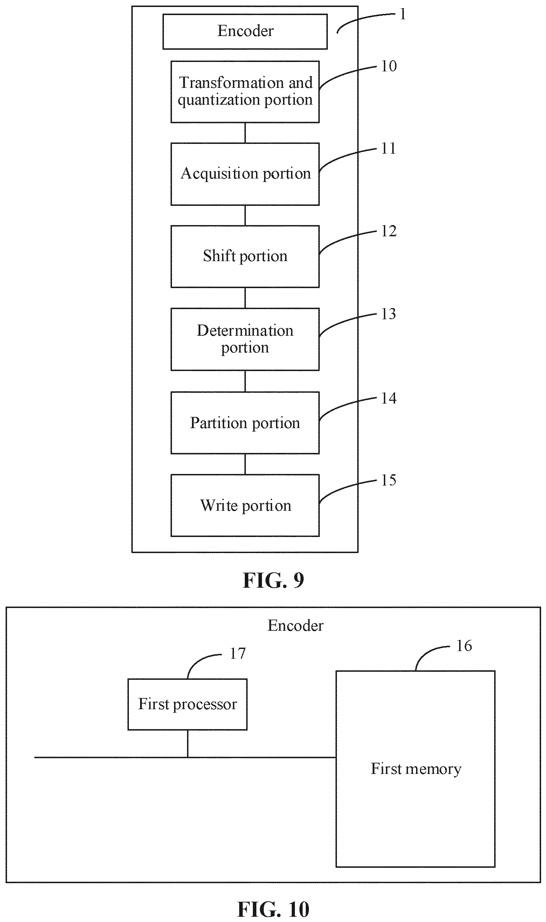

Based on the implementation of the above-mentioned embodiments, as illustrated in FIG. 9, an embodiment of the disclosure provides an encoder 1, which includes a transformation and quantization portion 10, an acquisition portion 11, a shift portion 12, a determination portion 13, a partition portion 14, and a write portion 15.

The transformation and quantization portion 10 is configured to perform geometric coordinate transformation and quantization on original points to be coded in a point cloud to be coded to obtain points to be coded.

The acquisition portion 11 is configured to acquire three-dimensional Morton codes of the points to be coded and a preset number of slice partitions.

The shift portion 12 is configured to shift the three-dimensional Morton codes rightwards by N bits to obtain M types of Morton codes of parent blocks corresponding to the points to be coded respectively. The M types of Morton codes correspond to M types of first parent blocks, M is less than or equal to the preset number of slice partitions, and N is a positive integer more than or equal to 1.

The determination portion 13 is configured to determine M first ranges of coding point indexes corresponding to the M types of Morton codes respectively.

The partition portion 14 is configured to partition a space where the points to be coded within each of the first ranges of coding point indexes are located into an initial slice.

The shift portion 12 is further configured to shift each initial slice leftwards according to a respective corresponding first three-dimensional translation coordinate to obtain M slices.

The write portion 15 is configured to write the first range of coding point indexes and first three-dimensional translation coordinate corresponding to each of the M slices into a bitstream.

In some embodiments of the disclosure, the determination portion 13 is further configured to, after the three-dimensional Morton codes of the points to be coded and the preset number of slice partitions are acquired and before the three-dimensional Morton codes are shifted rightwards by N bits to obtain the M types of Morton codes of the parent blocks corresponding to the points to be coded respectively, determine a difference between a maximum value and a minimum value in the three-dimensional Morton codes, shift the difference rightwards by three bits sequentially until a difference obtained after right shift by 3K bits is less than or equal to the preset number of slice partitions, K being an integer more than or equal to 0, and determine a value of the N to be 3K.

In some embodiments of the disclosure, the determination portion 13 is further configured to, after the three-dimensional Morton codes of the points to be coded and the preset number of slice partitions are acquired and before the three-dimensional Morton codes are shifted rightwards by N bits to obtain the M types of Morton codes of the parent blocks corresponding to the points to be coded respectively, determine a difference between a maximum value and a minimum value in the three-dimensional Morton codes, shift the difference rightwards sequentially until a difference obtained after right shift by L bits is less than or equal to the preset number of slice partitions, L being an integer more than or equal to 0, and determine a value of the N to be L.

In some embodiments of the disclosure, the determination portion 13 is further configured to, after the three-dimensional Morton codes of the points to be coded and the preset number of slice partitions are acquired and before the three-dimensional Morton codes are shifted rightwards by N bits to obtain the M types of Morton codes of the parent blocks corresponding to the points to be coded respectively, determine a number of parent blocks based on the preset number of slice partitions, the number of parent blocks being less than or equal to the preset number of slice partitions and being F times 8, and the number of parent blocks being written into the bitstream, determine a maximum value in the three-dimensional Morton codes, shift the maximum value rightwards by H bits until 3F bits of the maximum value remain, H being a positive integer more than or equal to 1, and determine a value of the N to be H.

In some embodiments of the disclosure, the determination portion 13 is further configured to, after the M first ranges of coding point indexes corresponding to the M types of Morton codes respectively are determined, determine a point number of the points to be coded corresponding to each first parent block in M first parent blocks based on the M first ranges of coding point indexes.

The partition portion 14 is further configured to continue to partition the M first parent blocks based on the point number and a preset point number threshold to obtain J second ranges of coding point indexes corresponding to J second parent blocks, J being a positive integer more than or equal to 1, and partition a space where the points to be coded within each of the second ranges of coding point indexes are located into an initial slice.

The shift portion 12 is further configured to shift each initial slice leftwards according to a respective corresponding second three-dimensional translation coordinate to obtain J slices.

The write portion 15 is further configured to write the second range of coding point indexes and second three-dimensional translation coordinate corresponding to each of the J slices into the bitstream.

In some embodiments of the disclosure, the preset point number threshold includes a preset point number upper limit and a preset point number lower limit. The partition portion 14 is further configured to perform secondary partition on the current first parent block corresponding to a point number to obtain at least two second parent blocks when the point number is greater than the preset point number upper limit, merge the current first parent block corresponding to a point number and a previous parent block to obtain a second parent block when the point number is less than the preset point number lower limit, obtain the J second parent blocks corresponding to the points to be coded when the point numbers are all between the current lower limit and the preset upper limit, and determine the J second ranges of coding point indexes corresponding to the J second parent blocks.

In some embodiments of the disclosure, the determination portion 13 is further configured to traverse the points to be coded within a preset range based on the M types of Morton codes to determine the M first ranges of coding point indexes, or, determine the M first ranges of coding point indexes corresponding to the M types of Morton codes respectively by use of an STL algorithm.

In some embodiments of the disclosure, the determination portion 13 is further configured to, after the space where the points to be coded within each of the first ranges of coding point indexes are located is partitioned into an initial slice and before each initial slice is shifted leftwards according to the respective corresponding first three-dimensional translation coordinate to obtain the M slices, determine the first three-dimensional translation coordinate corresponding to each initial slice based on N and the M types of Morton codes. The M types of Morton codes are in one-to-one correspondence with the M initial slices.

It can be understood that the encoder, after performing the preprocessing such as transformation and quantization in a geometry coding process, may search a parent block of each point to be coded based on a three-dimensional Morton code of the point to be coded, and implement slice partition based on the found parent blocks of the points to be coded. As such, the partition of multiple slices may be implemented in consideration of partitioning points to be coded corresponding to the same type of parent blocks into a slice, and then coding is performed based on each slice. Therefore, the effect of parallel coding is achieved, the coding/decoding efficiency is improved, and the coding time is reduced.

In practical applications, as illustrated in FIG. 10, an embodiment of the disclosure also provides an encoder, which includes a first memory 16 and a first processor 17.

The first memory 16 is configured to store an executable instruction.

The first processor 17 is configured to execute the executable instruction stored in the first memory 16 to implement a point cloud processing method for an encoder side.

The processor may be implemented by software, hardware, firmware, or a combination thereof. The processor may execute the corresponding operations of the point cloud processing method in the above-mentioned embodiments by use of a circuit, one or more Application Specific Integrated Circuits (ASICs), one or more general-purpose integrated circuits, one or more microprocessors, one or more programmable logic devices, or a combination of the above-mentioned circuits or devices, or another proper circuit or device.

An embodiment of the disclosure provides a computer-readable storage medium, which stores an executable instruction. The executable instruction is used for, when being executed, causing a first processor to implement a point cloud processing method for an encoder side.

Each component in the embodiment of the disclosure may be integrated into a processing unit. Alternatively, each unit may physically exist independently. Alternatively, two or more than two units may be integrated into a unit. The integrated unit may be implemented in a hardware form, or in form of a software function module.

When being implemented in form of a software function module and sold or used not as an independent product, the integrated unit may be stored in a computer-readable storage medium. Based on such an understanding, the technical solution of the embodiment substantially or parts making contributions to the conventional art or all or part of the technical solution may be embodied in form of a software product. The computer software product is stored in a storage medium, including a plurality of instructions for enabling a computer device (which may be a personal computer, a server, a network device, etc.) or a processor to execute all or part of the operations of the method in the embodiments. The storage medium may include various media capable of storing program codes, such as a Ferromagnetic Random Access Memory (FRAM), a Read Only Memory (ROM), a Programmable ROM (PROM), an Erasable PROM (EPROM), an Electrically EPROM (EEPROM), a flash memory, a magnetic surface memory, a compact disc, or a Compact Disc Read-Only Memory (CD-ROM). No limits are made in the embodiments of the disclosure.

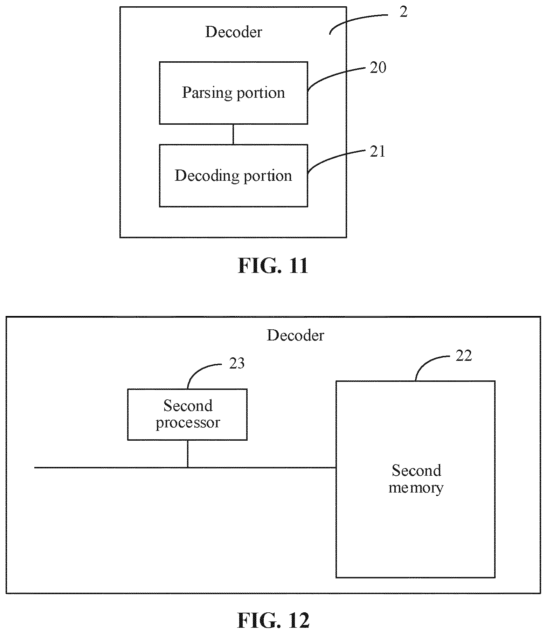

As illustrated in FIG. 11, an embodiment of the disclosure provides a decoder, which includes a parsing portion 20 and a decoding portion 21.

The parsing portion 20 is configured to parse a bitstream to obtain a first range of coding point indexes and first three-dimensional translation coordinate corresponding to each of M slices, a geometric bitstream, and an attribute bitstream.

The decoding portion 21 is configured to determine geometric information of a point cloud to be decoded of each slice based on the first range of coding point indexes and first three-dimensional translation coordinate corresponding to each slice, and the geometric bitstream, determine attribute information of the point cloud to be decoded of each slice based on the attribute bitstream, and obtain a restored value of the point cloud to be decoded based on the geometric information of the point cloud to be decoded of each slice and the attribute information of the point cloud to be decoded of each slice.

In practical applications, as illustrated in FIG. 12, an embodiment of the disclosure also provides a decoder, which includes a second memory 22 and a second processor 23.

The second memory 22 is configured to store an executable instruction.

The second processor 23 is configured to execute the executable instruction stored in the second memory 22 to implement a point cloud processing method for a decoder side.

An embodiment of the disclosure provides a computer-readable storage medium, which stores an executable instruction. The executable instruction is used for, when being executed, causing a second processor to implement a point cloud processing method for a decoder side.

It can be understood that the encoder, after performing the preprocessing such as transformation and quantization in a geometry coding process, may search a parent block of each point to be coded based on a three-dimensional Morton code of the point to be coded, and implement slice partition based on the found parent blocks of the points to be coded. As such, the partition of multiple slices may be implemented in consideration of partitioning points to be coded corresponding to the same type of parent blocks into a slice, and then coding is performed based on each slice. Therefore, the effect of parallel coding is achieved, the coding/decoding efficiency is improved, and the coding time is reduced. Since the ranges of coding point indexes and first three-dimensional translation coordinates corresponding to respective slices are different, it is necessary to code and write the range of coding point indexes and first three-dimensional translation coordinate corresponding to each slice into the bitstream during coding, and then the decoder may obtain them by decoding and parsing to restore a three-dimensional picture model. Therefore, the decoding efficiency is improved.

INDUSTRIAL APPLICABILITY

The embodiments of the disclosure provide a point cloud processing method, an encoder, a decoder, and a computer-readable storage medium. The encoder, after performing the preprocessing such as transformation and quantization in a geometry coding process, may search a parent block of each point to be coded based on a three-dimensional Morton code of the point to be coded, and implement slice partition based on the found parent blocks of the points to be coded. As such, the partition of multiple slices may be implemented in consideration of partitioning points to be coded corresponding to the same type of parent blocks into a slice, and then coding is performed based on each slice. Therefore, the effect of parallel coding is achieved, the coding/decoding efficiency is improved, and the coding time is reduced.

**Claims**

1. A point cloud processing method, applied to an encoder and comprising:

    performing geometric coordinate transformation and quantization on original points to be coded in a point cloud to be coded to obtain points to be coded;
    acquiring three-dimensional Morton codes of the points to be coded and a preset number of slice partitions;
    shifting the three-dimensional Morton codes rightwards by N bits to obtain M types of Morton codes of parent blocks corresponding to the points to be coded respectively, the M types of Morton codes corresponding to M types of first parent blocks, M being less than or equal to the preset number of slice partitions, and N being a positive integer more than or equal to 1;
    determining M first ranges of coding point indexes corresponding to the M types of Morton codes respectively;
    partitioning a space where points to be coded within each of the first ranges of coding point indexes are located into an initial slice, and shifting each initial slice leftwards according to a respective corresponding first three-dimensional translation coordinate to obtain M slices; and
    writing the first range of coding point indexes and the first three-dimensional translation coordinate corresponding to each of the M slices into a bitstream.

2. The method of claim 1, wherein after acquiring the three-dimensional Morton codes of the points to be coded and the preset number of slice partitions and before shifting the three-dimensional Morton codes rightwards by N bits to obtain M types of Morton codes of the parent blocks corresponding to the points to be coded respectively, the method further comprises:

    determining a difference between a maximum value and a minimum value in the three-dimensional Morton codes;
    shifting the difference rightwards by three bits sequentially until a difference obtained after right shift by 3K bits is less than or equal to the preset number of slice partitions, K being an integer more than or equal to 0; and
    determining a value of N to be 3K.

3. The method of claim 1, wherein after acquiring the three-dimensional Morton codes of the points to be coded and the preset number of slice partitions and before shifting the three-dimensional Morton codes rightwards by N bits to obtain M types of Morton codes of the parent blocks corresponding to the points to be coded respectively, the method further comprises:

    determining a difference between a maximum value and a minimum value in the three-dimensional Morton codes;
    shifting the difference rightwards sequentially until a difference obtained after right shift by L bits is less than or equal to the preset number of slice partitions, L being an integer more than or equal to 0; and
    determining a value of N to be L.

4. The method of claim 1, wherein after acquiring the three-dimensional Morton codes of the points to be coded and the preset number of slice partitions and before shifting the three-dimensional Morton codes rightwards by N bits to obtain M types of Morton codes of the parent blocks corresponding to the points to be coded respectively, the method further comprises:

    determining a number of parent blocks based on the preset number of slice partitions, the number of parent blocks being less than or equal to the preset number of slice partitions and being F times 8, and the number of parent blocks being written into the bitstream;
    determining a maximum value in the three-dimensional Morton codes;

shifting the maximum value rightwards by H bits until 3F bits of the maximum value remain, H being a positive integer more than or equal to 1; and

determining a value of N to be H.

5. The method of any one of claims 1-4, wherein after determining the M first ranges of coding point indexes corresponding to the M types of Morton codes respectively, the method further comprises:

determining a point number of the points to be coded corresponding to each of M first parent blocks based on the M first ranges of coding point indexes;

continuing to partition the M first parent blocks based on the point number and a preset point number threshold to obtain J second ranges of coding point indexes corresponding to J second parent blocks, J being a positive integer more than or equal to 1;

partitioning a space where points to be coded within each of the second ranges of coding point indexes are located into an initial slice, and shifting each initial slice leftwards according to a respective corresponding second three-dimensional translation coordinate to obtain J slices; and

writing the second range of coding point indexes and second three-dimensional translation coordinate corresponding to each of the J slices into the bitstream.

6. The method of claim 5, wherein the preset point number threshold comprises a preset point number upper limit and a preset point number lower limit; and continuing to partition the M first parent blocks based on the point number and the preset point number threshold to obtain J second ranges of coding point indexes corresponding to J second parent blocks comprises:

performing, in response to determining that the point number is greater than the preset point number upper limit, secondary partition on the current first parent block corresponding to the point number to obtain at least two second parent blocks,

merging, in response to determining that the point number is less than the preset point number lower limit, the current first parent block corresponding to the point number and a previous parent block to obtain a second parent block,

obtaining the J second parent blocks corresponding to the points to be coded when all point numbers are between the preset lower limit and the preset upper limit, and

determining the J second ranges of coding point indexes corresponding to the J second parent blocks.

7. The method of any one of claims 1-4, wherein determining the M first ranges of coding point indexes corresponding to the M types of Morton codes respectively comprises:

traversing the points to be coded within a preset range based on the M types of Morton codes to determine the M first ranges of coding point indexes; or,

determining the M first ranges of coding point indexes corresponding to the M types of Morton codes respectively through a Standard Template Library, STL, algorithm.

8. The method of any one of claims 1-4, wherein after partitioning the space where points to be coded within each of the first ranges of coding point indexes are located into the initial slice and before shifting each initial slice leftwards according to a respective corresponding first three-dimensional translation coordinate to obtain the M slices, the method further comprises:

determining, based on N and the M types of Morton codes, the first three-dimensional translation coordinate corresponding to each initial slice, the M Morton codes being in one-to-one correspondence with the M initial slices.

9. A point cloud processing method, applied to a decoder and comprising:

parsing a bitstream to obtain a first range of coding point indexes and a first three-dimensional translation coordinate corresponding to each of M slices, a geometric bitstream, and an attribute bitstream;

determining geometric information of a point cloud to be decoded of each slice based on the first range of coding point indexes and the first three-dimensional translation coordinate corresponding to each slice, and the geometric bitstream;

determining attribute information of the point cloud to be decoded of each slice based on the attribute bitstream; and

obtaining a restored value of the point cloud to be decoded based on the geometric information of the point cloud to be decoded of each slice and the attribute information of the point cloud to be decoded of each slice.

10. An encoder, comprising:

a transformation and quantization portion, configured to perform geometric coordinate transformation and quantization on original points to be coded in a point cloud to be coded to obtain points to be coded;
an acquisition portion, configured to acquire three-dimensional Morton codes of the points to be coded and a preset number of slice partitions;
a shift portion, configured to shift the three-dimensional Morton codes rightwards by N bits to obtain M types of Morton codes of parent blocks corresponding to the points to be coded respectively, the M types of Morton codes corresponding to M types of first parent blocks, M being less than or equal to the preset number of slice partitions, and N being a positive integer more than or equal to 1;
a determination portion, configured to determine M first ranges of coding point indexes corresponding to the M types of Morton codes respectively;
a partition portion, configured to partition a space where points to be coded within each of the first ranges of coding point indexes are located into an initial slice,
the shift portion being further configured to shift each initial slice leftwards according to a respective corresponding first three-dimensional translation coordinate to obtain M slices; and
a write portion, configured to write the first range of coding point indexes and the first three-dimensional translation coordinate corresponding to each of the M slices into a bitstream.

11. A decoder, comprising:

a parsing portion, configured to parse a bitstream to obtain a first range of coding point indexes and a first three-dimensional translation coordinate corresponding to each of M slices, a geometric bitstream, and an attribute bitstream; and
a decoding portion, configured to determine geometric information of a point cloud to be decoded of each slice based on the first range of coding point indexes and the first three-dimensional translation coordinate corresponding to each slice, and the geometric bitstream, determine attribute information of the point cloud to be decoded of each slice based on the attribute bitstream, and obtain a restored value of the point cloud to be decoded based on the geometric information of the point cloud to be decoded of each slice and the attribute information of the point cloud to be decoded of each slice.

12. An encoder, comprising:

a first memory, configured to store an executable instruction; and
a first processor, configured to execute the executable instruction stored in the first memory to implement the method of any one of claims 1-8.

13. A decoder, comprising:

a second memory, configured to store an executable instruction; and
a second processor, configured to execute the executable instruction stored in the second memory to implement the method of claim 9.

14. A storage medium, storing an executable instruction which, when being executed, causes a first processor to implement the method of any one of claims 1-8.

15. A storage medium, storing an executable instruction which, when being executed, causes a second processor to implement the method of claim 9.

**FIG. 1**

| x:<br>  | 0<br>000 | 1<br>001 | 2<br>010 | 3<br>011 | 4<br>100 | 5<br>101 | 6<br>110 | 7<br>111 |
|---|---|---|---|---|---|---|---|---|
| y: 0<br>000 | 000000 | 000001 | 000100 | 000101 | 010000 | 010001 | 010100 | 010101 |
| 1<br>001 | 000010 | 000011 | 000110 | 000111 | 010010 | 010011 | 010110 | 010111 |
| 2<br>010 | 001000 | 001001 | 001100 | 001101 | 011000 | 011001 | 011100 | 011101 |
| 3<br>011 | 001010 | 001011 | 001110 | 001111 | 011010 | 011011 | 011110 | 011111 |
| 4<br>100 | 100000 | 100001 | 100100 | 100101 | 110000 | 110001 | 110100 | 110101 |
| 5<br>101 | 100010 | 100011 | 100110 | 100111 | 110010 | 110011 | 110110 | 110111 |
| 6<br>110 | 101000 | 101001 | 101100 | 101101 | 111000 | 111001 | 111100 | 111101 |
| 7<br>111 | 101010 | 101011 | 101110 | 101111 | 111010 | 111011 | 111110 | 111111 |

FIG. 2

FIG. 3

FIG. 4

FIG. 5

```
┌─────────────────────────────────────────────────────────┐
│  Geometric coordinate transformation and quantization     │ ⌐S101
│  are performed on original points to be coded in a point  │
│  cloud to be coded to obtain points to be coded           │
└─────────────────────────────────────────────────────────┘
                           │
                           ▼
┌─────────────────────────────────────────────────────────┐
│  Three-dimensional Morton codes of the points to be       │ ⌐S102
│  coded and a preset number of slice partitions are        │
│  acquired                                                 │
└─────────────────────────────────────────────────────────┘
                           │
                           ▼
┌─────────────────────────────────────────────────────────┐
│  The three-dimensional Morton codes are shifted           │ ⌐S103
│  rightwards by N bits to obtain M types of Morton codes   │
│  of parent blocks corresponding to the points to be       │
│  coded respectively                                       │
└─────────────────────────────────────────────────────────┘
                           │
                           ▼
┌─────────────────────────────────────────────────────────┐
│  M first ranges of coding point indexes corresponding to  │ ⌐S104
│  the M types of Morton codes respectively are determined  │
└─────────────────────────────────────────────────────────┘
                           │
                           ▼
┌─────────────────────────────────────────────────────────┐
│  A space where points to be coded within each of the      │
│  first ranges of coding point indexes are located is      │ ⌐S105
│  partitioned into an initial slice, and each initial      │
│  slice is shifted leftwards according to a respective     │
│  corresponding first three-dimensional translation        │
│  coordinate to obtain M slices                            │
└─────────────────────────────────────────────────────────┘
                           │
                           ▼
┌─────────────────────────────────────────────────────────┐
│  The first coding point index range and first three-      │ ⌐S106
│  dimensional translation coordinate corresponding to      │
│  each of the M slices are written into a bitstream        │
└─────────────────────────────────────────────────────────┘
```

**FIG. 6**

Geometric coordinate transformation and quantization are performed on original points to be coded in a point cloud to be coded to obtain points to be coded — S201

Three-dimensional Morton codes of the points to be coded and a preset number of slice partitions are acquired — S202

The three-dimensional Morton codes are shifted rightwards by N bits to obtain M types of Morton codes of parent blocks corresponding to the points to be coded respectively — S203

M first ranges of coding point indexes corresponding to the M types of Morton codes respectively are determined — S204

A point number of the points to be coded corresponding to each of M first parent blocks is determined based on the M first ranges of coding point indexes — S205

The M first parent blocks continue to be partitioned based on the point number and a preset point number threshold to obtain J second ranges of coding point indexes corresponding to J second parent blocks — S206

A space where the points to be coded within each of the second ranges of coding point indexes are located is partitioned into an initial slice, and each initial slice is shifted leftwards according to a respective corresponding second three-dimensional translation coordinate to obtain J slices — S207

The second range of coding point indexes and second three-dimensional translation coordinate corresponding to each of the J slices are written into a bitstream — S208

FIG. 7

A bitstream is parsed to obtain a first range of coding point indexes and first three-dimensional translation coordinate corresponding to each of M slices, a geometric bitstream, and an attribute bitstream ⌐S301

Geometric information of a point cloud to be decoded of each slice is determined based on the first range of coding point indexes and first three-dimensional translation coordinate corresponding to each slice, and the geometric bitstream ⌐S302

Attribute information of the point cloud to be decoded of each slice is determined based on the attribute bitstream ⌐S303

A restored value of the point cloud to be decoded is obtained based on the geometric information of the point cloud to be decoded of each slice and the attribute information of the point cloud to be decoded of each slice ⌐S304

**FIG. 8**

**FIG. 9**

**FIG. 10**

Decoder                                    2

Parsing portion                            20

Decoding portion                           21

**FIG. 11**

Decoder

Second
processor                                  23

Second
memory                                     22

**FIG. 12**

## INTERNATIONAL SEARCH REPORT

| International application No. |
|---|
| **PCT/CN2019/122502** |

**A. CLASSIFICATION OF SUBJECT MATTER**

G06T 9/00(2006.01)i

According to International Patent Classification (IPC) or to both national classification and IPC

**B. FIELDS SEARCHED**

Minimum documentation searched (classification system followed by classification symbols)

G06T

Documentation searched other than minimum documentation to the extent that such documents are included in the fields searched

Electronic data base consulted during the international search (name of data base and, where practicable, search terms used)

CNKI, 万方, IEEE, CNABS, CNTXT, VEN, EPTXT, USTXT, WOTXT, JPTXT: 编码, 解码, 压缩, 解压, 莫顿码, 莫顿, 三维, 立体, 几何, 属性, 坐标, 座标, 条带, 点云, 平移, 分割, 划分, 确定, 得到, 索引, 移位, 移动, decode, code, encode, slice, information, morton, spatial, coordinate, point, cloud, 3d, 3-D, attribute

**C. DOCUMENTS CONSIDERED TO BE RELEVANT**

| Category* | Citation of document, with indication, where appropriate, of the relevant passages | Relevant to claim No. |
|---|---|---|
| A | CN 108632621 A (PEKING UNIVERSITY SHENZHEN GRADUATE SCHOOL) 09 October 2018 (2018-10-09)<br>description, paragraphs [0048] and [0059], and figure 1 | 1-15 |
| A | CN 109979008 A (PEKING UNIVERSITY SHENZHEN GRADUATE SCHOOL) 05 July 2019 (2019-07-05)<br>entire document | 1-15 |
| A | CN 109993839 A (PEKING UNIVERSITY SHENZHEN GRADUATE SCHOOL) 09 July 2019 (2019-07-09)<br>entire document | 1-15 |
| A | US 2016086353 A1 (UNIV MARIBOR) 24 March 2016 (2016-03-24)<br>entire document | 1-15 |
| A | US 2019311502 A1 (APPLE INC.) 10 October 2019 (2019-10-10)<br>entire document | 1-15 |

☐ Further documents are listed in the continuation of Box C.    ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **10 August 2020** | **26 August 2020** |

| Name and mailing address of the ISA/CN | Authorized officer |
|---|---|
| **China National Intellectual Property Administration (ISA/CN)**<br>**No. 6, Xitucheng Road, Jimenqiao Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2019/122502**

| Patent document cited in search report | | | Publication date (day/month/year) | Patent family member(s) | | | Publication date (day/month/year) |
|---|---|---|---|---|---|---|---|
| CN | 108632621 | A | 09 October 2018 | CN | 108632621 | B | 02 July 2019 |
| | | | | WO | 2019213985 | A1 | 14 November 2019 |
| | | | | US | 2020151915 | A1 | 14 May 2020 |
| CN | 109979008 | A | 05 July 2019 | None | | | |
| CN | 109993839 | A | 09 July 2019 | None | | | |
| US | 2016086353 | A1 | 24 March 2016 | US | 9734595 | B2 | 15 August 2017 |
| US | 2019311502 | A1 | 10 October 2019 | None | | | |

Form PCT/ISA/210 (patent family annex) (January 2015)